# EUROPÄISCHE PATENTSCHRIFT

(11) **EP 3 325 895 B1**
(45) Veröffentlichungstag und Bekanntmachung des Hinweises auf die Patenterteilung: **27.11.2019**
(21) Anmeldenummer: 16725369.9
(22) Anmeldetag: 24.05.2016
(51) Int. Cl.: F24H 3/02, F24H 3/04, B29D 12/02, G02C 13/00, H05B 3/06, F24H 9/00, H05B 3/16

(54) **HEISSLUFTGERÄT**
AIR HEATER
GÉNÉRATEUR D'AIR CHAUD

(30) Priorität: 25.07.2015 DE 102015009675
(43) Veröffentlichungstag der Anmeldung: 30.05.2018
(73) Patentinhaber: Deyle GmbH, 71394 Kernen-Rommelshausen (DE)
(72) Erfinder: MEHL, Horst, 71364 Winnenden (DE)
(74) Vertreter: Bartels und Partner, Patentanwälte
(86) Internationale Anmeldenummer: PCT/EP2016/000854
(87) Internationale Veröffentlichungsnummer: WO 2017/016621

(56) Entgegenhaltungen:
- DE-A1- 2 808 210
- DE-U1-202005 012 394
- FR-A1- 2 535 474
- US-A- 3 637 982
- US-A- 3 816 705

## Beschreibung

Die Erfindung betrifft ein Heißluftgerät, insbesondere zur Erwärmung von Brillengestellen zwecks deren Formgebung, mit den Merkmalen im Oberbegriff von Anspruch 1.

Von der Schutzrechtsinhaberin wird ein derartiges Heißluftgerät unter der Marke "Passat" in mehreren Ausführungsformen vertrieben. Gemeinsam ist allen Ausführungsformen, dass eine Gebläseeinrichtung aus der Umgebung Luft ansaugt, diesen Luftstrom mittels einer Heizeinrichtung erwärmt und einer Luftabgabeeinrichtung zuführt. In diesen ca. 140 °C heißen Luftstrom können dann zumindest Teile eines Brillengestells zwecks Erwärmung gehalten werden, so dass sie im erwärmten Zustand in eine geeignete Form von Hand gebogen werden können.

Seitens der Anwender (Optikerfachgeschäfte) wird eine Weiterentwicklung dieses Heißluftgeräts gefordert, die sich im laufenden Betrieb durch eine geringe Geräuschentwicklung und eine gleichmäßige Temperatur des Abgabe-Luftstroms auszeichnen soll, um die Brillengestelle schneller und schonender erwärmen zu können.

Der Erfindung liegt daher die Aufgabe zugrunde, ein verbessertes Heißluftgerät aufzuzeigen, das im Betrieb leiser ist und dessen Heißluftstrom einen vergleichmäßigten Temperaturverlauf aufweist.

Weitere Heißluftgeräte werden in der DE 41 13 899 A, DE 836 411 C, der DE 20 2005 012 394 U1, der DE 28 08 210 A1, der US 3 637 982 und der US 3 816 705 aufgezeigt. Ein Heißluftgerät gemäß dem Oberbegriff des Anspruch 1 ist aus dem Dokument FR 2 535 474 bekannt.

Diese Aufgabe wird durch ein Heißluftgerät mit den Merkmalen von Anspruch 1 gelöst. Vorteilhafte Ausführungsformen des Heißluftgeräts gehen aus den Unteransprüchen hervor.

Gemäß dem Kennzeichen von Anspruch 1 ist vorgesehen, dass der Elektromotor drehzahlvariabel ist und dass der hindernisfreie Abstand zwischen der Gebläseeinrichtung und der Heizeinrichtung derart gewählt ist, dass sich zumindest an einem Einlass der Heizeinrichtung eine durch das Lüfterrad erzeugte, vergleichmäßigte Luftströmung einstellt, was geräuscharm ist.

Es ist weiter vorgesehen, dass die Heizeinrichtung in einen Luftführungskanal aufgenommen ist, der sich von einer Stelle des geringsten Durchmessers sowohl in Richtung der Luftabgabeeinrichtung als auch in Richtung der Gebläseeinrichtung konisch erweitert. Die Heizeinrichtung weist vorzugsweise Luftleitstege auf, welche den Luftführungskanal durchgreifen. Durch die Stelle des geringsten Durchmessers wird eine vorteilhafte, vergleichmäßigte Beschleunigung der Luftströmung erreicht. Dadurch, dass die Heizeinrichtung in den Luftführungskanal aufgenommen ist, ist darüber hinaus sichergestellt, dass die gesamte Luftströmung durch die Heizeinrichtung erwärmt wird. Durch die Luftleitstege wird der Luftstrom zudem kanalisiert, wodurch die Bildung von Verwirbelungen weiter minimiert wird. Auch wird hierdurch der Luftstrom in Richtung der Luftabgabeeinrichtung weiter vergleichmäßigt.

Durch die Drehzahlvariabilität des Elektromotors kann der Druck, mit dem der Luftstrom zur Heizeinrichtung und weiter zur Abgabeeinrichtung gefördert wird, eingestellt und insbesondere an einen erwärmungsabhängigen Widerstand im Bereich der Heizeinrichtung angepasst werden. Bei der Erwärmung des Luftstroms mit der Heizeinrichtung dehnt sich dieser aus. Da bei den bekannten Heißluftgeräten der Lüfter mit einer konstanten Drehzahl betrieben wird, kommt es gerätebedingt zu einer ungleichförmigen Beschleunigung des Luftstroms. Diese Beschleunigung lässt sich nun aufgrund der Drehzahlvariabilität vergleichmäßigen. Der erhitzte Luftstrom, der nun in die Luftabgabeeinrichtung einströmt, weist gegenüber bekannten Lösungen deshalb geringere Druck- und Geschwindigkeitsschwankungen auf. Ein weiterer Vorteil des drehzahlvariablen Elektromotors ist, dass die durch ihn erzeugten Vibrationen minimiert werden können. Vorteilhaft ist auch, dass die Drehzahl abhängig von einem vom Anwender gewählten Programm frei eingestellt und auch beibehalten werden kann.

Durch den hindernisfreien Abstand zwischen der Gebläse- und der Heizeinrichtung wird eine verwirbelungsfreie oder zumindest verwirbelungsarme Luftströmung erzeugt, die dann in die Heizeinrichtung einströmen kann. Dank des vergleichmäßigten, ein laminares Strömungsprofil aufweisenden Luftstroms, der von der Heizeinrichtung weiter zur Luftabgabeeinrichtung gefördert wird, ist über einen großen Abgabebereich eine konstante Luftabgabemenge mit konstant vorgegebener Formtemperatur erreicht, so dass der Optiker, der das Brillengestell von seiner Form her einem Träger oder einer Trägerin anzupassen hat, nicht mehr wie früher befürchten muss, dass es aufgrund von ungleichmäßig auftretenden "Wärmenestern" mit sehr hoher Temperatur das regelmäßig aus Kunststoffmaterial bestehende Brillengestell "überhitzt" als Ausschuss auszusortieren ist. Auch kann ausgeschlossen werden, dass bei der Handhabung nebst Formgebung des Brillengestells sich der Optiker an solchen "Wärmenestern" verbrennt, was ihm die Handhabung solcher Heißluftgeräte nicht gerade sympathisch macht.

Mit der erfindungsgemäßen Lösung kann der Optiker eine genau vorgegebene Formtemperatur, abhängig vom Material des Brillengestells, einstellen und die Elektronik des Heißluftgerätes stellt am drehzahlvariablen Antrieb sowie an der Heizeinrichtung die hierfür benötigten Sollwerte ein. Der dann hierdurch erzeugte, vergleichmäßigte Luftstrom hält im Bereich der Luftabgabeeinrichtung ohne Bildung von "Wärmenestern" die eingestellte Temperatur konstant bei, so dass es weder zum Ausschuss noch zu Verletzungen bei der Bedienperson kommt. Das hat so keine Entsprechung im Stand der Technik.

Die Heizeinrichtung kann mindestens einen elektrisch beheizbaren Heizdraht aufweisen, der um die Luftleitstege herumgeführt ist. Dieser Heizdraht kann wendelförmig gewickelt und auch mehrfach um die Luftleitstege herumgeführt sein. Auf diese Weise kann der Heizdraht mit der Luftströmung vorteilhaft in direkten Kontakt gebracht und so angeordnet werden, dass der Luftstrom gleichmäßig erwärmt wird und den Betrieb beeinträchtigende Druckschwankungen vermieden sind.

Besonders vorteilhaft ist der hindernisfreie Abstand zwischen der Gebläseeinrichtung und der Heizeinrichtung durch einen bauteilfreien Raum gebildet, der durch die Luftleitstege der Heizeinrichtung sowie die zuordenbaren Wandteile des Luftführungskanals begrenzt ist. Der hindernisfreie Abstand erzeugt eine laminare Luftströmung als vergleichmäßigte Luftströmung beim Betrieb der Gebläseeinrichtung. Durch die laminare Luftströmung wird die Geräuschentwicklung im Bereich der Heizeinrichtung weiter reduziert. Der Grund hierfür ist darin zu sehen, dass die Luft mit einem geringeren Widerstand in die Heizeinrichtung einströmen kann.

Das Lüfterrad kann einen größeren Durchmesser als die Luftleitstege aufweisen. Dies hat den Vorteil, dass das Lüfterrad mit einer geringeren Drehgeschwindigkeit betrieben werden kann. Auf diese Weise lassen sich Vibrationen und Verwirbelungen minimieren. Darüber hinaus kann eine kostengünstigere Gebläseeinrichtung vorgesehen werden. Mit besonderem Vorteil können Lüfter verbaut werden, die auch in Computer eingebaut werden. Diese Lüfter sind besonders günstig erhältlich und haben eine lange Lebensdauer.

Die konische Erweiterung des Luftführungskanals geht in Richtung der Gebläseeinrichtung vorteilhaft in einen zylindrischen Führungsabschnitt über. Der zylindrische Führungsabschnitt maximiert den freien Raum zwischen der Gebläseeinrichtung und der Heizeinrichtung.

Die Gebläseeinrichtung kann ein Axiallüfter sein. Axiallüfter sind in vielfältigen Ausführungsformen auf dem Markt frei erhältlich und lassen sich daher besonders einfach und kostengünstig in das Heißluftgerät einbauen, was so die Gesamt-Herstellkosten reduzieren hilft.

Die Luftabgabeeinrichtung ist vorteilhaft für die zumindest teilweise Aufnahme eines zu formenden Brillengestells topfförmig ausgebildet und schließt sich über eine luftdurchlässige, die laminare Abgabeströmung weiter begünstigende Trenneinrichtung, insbesondere in Form einer plattenförmigen Sieb- oder Gitterstruktur, an die Heizeinrichtung an. Durch die topfförmige Ausbildung der Luftabgabeeinrichtung wird ein vorteilhafter Abgaberaum für die Erwärmung von zu formenden Teilen der Brillengestelle bereitgestellt, in dem sich die laminare Luftströmung weiter gleichmäßig - ohne Bildung von "Wärmenestern" - verteilen kann und dadurch eine schonende Erwärmung der Brillengestelle ermöglicht. Mit der Trenneinrichtung wird zudem verhindert, dass ein Anwender in Kontakt mit dem stromführenden Heizdraht der Heizeinrichtung kommen kann und dass eventuell vom Brillengestell ungewollt abfallende Teile in die Heizeinrichtung hineinfallen können, was das Gerät beschädigen könnte.

Mit besonderem Vorteil ist die Heizeinrichtung in einem Ständerteil aufgenommen, an dessen oberem Ende sich die Luftabgabeeinrichtung anschließt und an dessen unterem Ende sich die Gebläseeinrichtung befindet, die vorzugsweise in ein Sockelteil aufgenommen ist, das einen größeren Außendurchmesser als das Ständerteil aufweist. Auf diese Weise ergibt sich ein besonders standfestes Gerät. Das Gerät lässt sich durch Anpassen seines Sockelteils aber auch ohne Weiteres als Einbaugerät innerhalb von Tischplattensystemen in Optiker-Fachgeschäften stationär verwenden. Weiterhin kann man im größeren Sockelteil ein größeres Lüfterrad anordnen als es im Ständerteil möglich wäre. Darüber hinaus kann der Durchmesser des Ständerteils für die Zwecke der Heizeinrichtung optimiert werden, ohne die Gebläseeinrichtung hierbei verändern zu müssen, was einen modularen Aufbau für das Heißluftgerät ermöglicht.

Das Sockelteil kann zumindest einen, vorzugsweise bodenseitigen, Lufteinlass aufweisen und über zumindest einen Fuß von einer Aufstellfläche für das Heißluftgerät beabstandet sein. Auf diese Weise kann das Heißluftgerät vorteilhaft auf seiner Unterseite Luft widerstandsfrei ansaugen und diese mit der Gebläseeinrichtung durch das Sockelteil in das Ständerteil fördern. Somit ergibt sich eine besonders einfache Luftströmungsführung ohne Richtungsumlenkungen und die Lufteinlässe, insbesondere in Schlitzform, können außerhalb des Sichtbereichs angeordnet werden.

Der Elektromotor ist bevorzugt ein elektronisch kommutierender Gleichstrommotor. Derartige bürstenfreie Elektromotoren haben eine längere Lebensdauer und lassen sich besonders einfach ansteuern.

Mit Vorteil ist eine elektronische Steuereinrichtung zur Ansteuerung der Heizeinrichtung und/oder der Gebläseeinrichtung vorgesehen. Die elektronische Steuereinheit verfügt zudem bevorzugt über einen Näherungsschalter zum Einschalten der Gebläseeinrichtung und/oder der Heizeinrichtung.

Mit der elektronischen Steuereinrichtung kann die Ansteuerung der Heizeinrichtung und der Gebläseeinrichtung programmgesteuert erfolgen. Auf diese Weise lassen sich komplexe Regelungen realisieren, die eine möglichst schnelle Erwärmung des Luftstroms nach dem Einschalten und einen möglichst gleichmäßigen Temperaturverlauf der Luftströmung im weiteren Betrieb gewährleisten. Darüber hinaus kann als Neuerung eine Art Bereitschaftsbetriebsmodus vorgesehen sein, in dem das Heißluftgerät durch einen Näherungsschalter feststellt, ob sich ein Anwender in der Nähe oder ob sich ein Brillengestell im Bereich der Luftabgabeeinrichtung befindet, und der dann das Heißluftgerät sinnfällig aktiviert. Dabei ist es denkbar, mit dem Näherungsschalter auch das Ausschalten der Gebläseeinrichtung und/oder der Heizeinrichtung zu steuern.

Am Gehäuse, vorzugsweise am Sockelteil, kann zumindest ein Schalter zur Steuerung der Gebläseeinrichtung und/oder der Heizeinrichtung vorgesehen sein, insbesondere in Form eines Inkremental-Gebers zur Programmwahl und/oder zur Solltemperatureinstellung für die Heizeinrichtung. Insbesondere ist vorgesehen, dass ein Drehschalter zur Programmwahl und ein weiterer Drehschalter zur Solltemperatureinstellung vorgesehen sind. Die Schalter können darüber hinaus als Drucktaster ausgeführt sein, um das Heißluftgerät aus dem genannten Bereitschaftsbetriebsmodus heraus wieder einzuschalten.

Im Gehäuse ist bevorzugt eine Anzeigeeinrichtung vorgesehen, insbesondere zur Anzeige der Isttemperatur des Luftstroms im Bereich der Luftabgabeeinrichtung und/oder zur Einstellung einer Solltemperatur für den in die Luftabgabeeinrichtung einströmenden Luftstrom. Beispielsweise kann die Isttemperatur blinkend angezeigt werden und die Anzeige kann bei Übereinstimmung der Isttemperatur mit der Solltemperatur in einen Daueranzeigebetrieb übergehen.

Die Gebläseeinrichtung kann in einer Aussparung einer Leiterplatte angeordnet sein, an welcher der Schalter und/oder die Anzeigeeinrichtung befestigt ist. Bevorzugt umgibt die Leiterplatte die im Sockelteil angeordnete Gebläseeinrichtung. Diese Lösung hat den Vorteil, besonders bauraumsparend zu sein. Weiterhin ermöglicht sie eine direkte Befestigung der Schalter und der Anzeigeeinrichtung an der Leiterplatte derart, dass sie aus dem Gehäuse herausragen und einfach sowie ergonomisch optimiert bedienbar sind, d.h. sichtbar bzw. betätigbar sind.

Die Erfindung wird nachfolgend anhand von einem in den Figuren dargestellten Ausführungsbeispiel näher erläutert. Es zeigen:
- Fig. 1: eine Seitenansicht eines erfindungsgemäßen Heißluftgeräts; und
- Fig. 2: einen Längsschnitt durch das Heißluftgerät entlang der Linie A-A in Fig. 1.

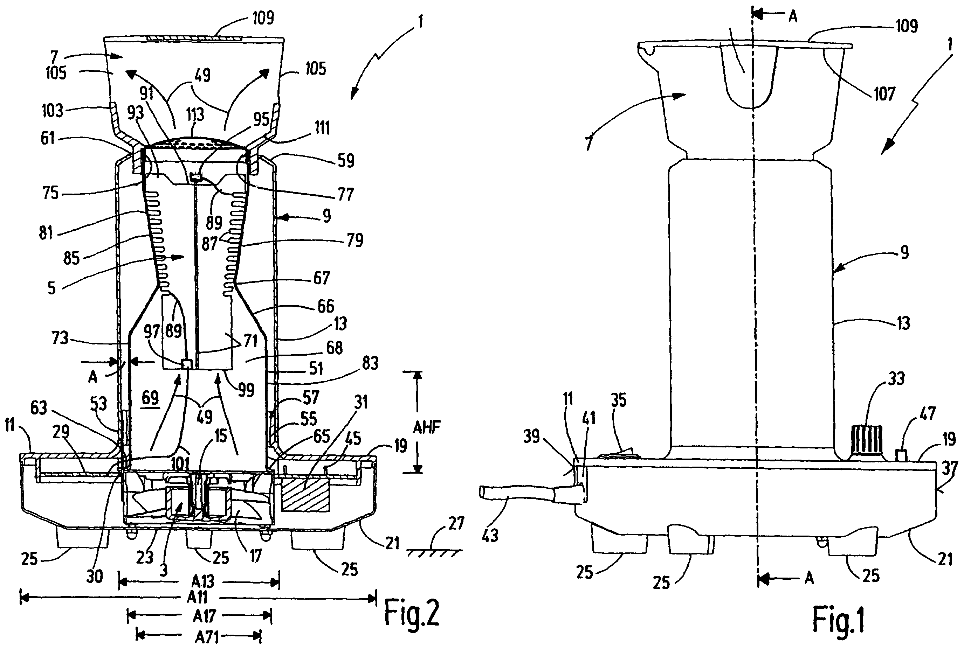

In den Fig. 1 und 2 ist ein erfindungsgemäßes Heißluftgerät 1 dargestellt. Dieses ist zur Erwärmung von Brillengestellen zwecks deren Formgebung vorgesehen. Das Heißluftgerät 1 besteht aus einer Gebläseeinrichtung 3, einer elektrischen Heizeinrichtung 5 und einer Luftabgabeeinrichtung 7. Diese Einrichtungen 3, 5, 7 sind in einem Gehäuse 9 angeordnet. Die Gebläseeinrichtung 3 ist in einem Sockelteil 11 vorgesehen. Am Sockelteil 11 ist ein zylindrisches Ständerteil 13 befestigt, dessen Außendurchmesser A13 kleiner ist als der des Sockelteils 11 mit dem Außendurchmesser A11 und in den die Heizeinrichtung 5 aufgenommen ist. Oberhalb des Ständerteils 13 befindet sich die Luftabgabeeinrichtung 7, die in Form eines sogenannten Wärmetopfes ausgeführt ist.

Die Gebläseeinrichtung 3 ist ein Axiallüfter und weist ein mit einem Elektromotor 15 antreibbares Lüfterrad 17 auf. Der Elektromotor 15 ist als elektronisch kommutierender Gleichstrommotor ausgebildet und ist erfindungsgemäß drehzahlvariabel angesteuert. Die Gebläseeinrichtung 3 ist im Sockelteil 11 zwischen einem Sockeloberteil 19 und einem Sockelunterteil 21 angeordnet. Sie saugt durch einen Lufteinlass 23, der bodenseitig im Sockelunterteil 21 vorgesehen ist, Umgebungsluft an. Der Lufteinlass 23 ist insbesondere durch eine Mehrzahl von Schlitzen gebildet und durch fünf auf einem Kreis versetzt angeordnete Füße 25 ist das Sockelteil 11 von einer Aufstellfläche 27 beabstandet. Eine Leiterplatte 29 umgibt mit einer Aussparung 30 die Gebläseeinrichtung 3. Auf dieser Leiterplatte 29 ist eine elektronische Steuereinrichtung 31 angeordnet. Die Steuereinrichtung 31 ist zur Ansteuerung der Heizeinrichtung 5 und/oder der Gebläseeinrichtung 3 vorgesehen. Des Weiteren sind an der Leiterplatte 29 zwei Drehschalter 33 in Form von Inkremental-Gebern und ein Netzschalter 35 angeordnet, die durch das Sockeloberteil 19 ragen und dort ergonomisch günstig für einen Anwender angeordnet sind, wobei die Drehschalter 33 auf einer Vorderseite 37 des Heißluftgeräts 1 und der Netzschalter 35 auf dessen Rückseite 39 vorgesehen sind. In der Nähe des Netzschalters 35 ist ein Anschluss 41 für eine Stromleitung 43 im Sockelteil 11 vorgesehen. Weiterhin ist in das Sockelteil 11 ein Näherungsschalter 45 zum Einschalten der Gebläseeinrichtung 3 und/oder der Heizeinrichtung 5 eingebaut. Des Weiteren ist im Gehäuse 9 eine Anzeigeeinrichtung 47 zur Anzeige der Isttemperatur des Luftstroms 49 im Bereich der Luftabgabeeinrichtung 7 und/oder zur Einstellung einer Solltemperatur für den in die Luftabgabeeinrichtung 7 einströmenden Luftstrom 49 angeordnet. Da die Fig. 1 einen gegenüber Fig. 2 um 90° gedrehten Längsschnitt entlang der Linie A-A betrifft, sind die vorstehend genannten Bedien- und Anzeigekomponenten in der Fig. 1 nicht aufgezeigt.

Die mit der Gebläseeinrichtung 3 angesaugte Luft wird in einen Luftführungskanal 51 gefördert, der im Ständerteil 13 vorgesehen ist. Das Ständerteil 13 ist dabei im Wesentlichen zylindrisch ausgebildet und umgibt den Luftführungskanal 51 in einem Abstand A. Auf diese Weise ist das Ständerteil 13 wärmeentkoppelt und kann auch im laufenden Betrieb problemlos von einem Anwender angefasst werden. An seinem in der Bildebene unteren Ende 53 ist das Ständerteil 13 auf einen Absatz 55 eines zylinderförmigen Kragens 57 des Sockeloberteils 19 aufgesteckt und dort lösbar oder unlösbar festgelegt. An seinem oberen Ende 59 weist das Ständerteil 13 eine Öffnung 61 für den Luftführungskanal 51 und die Luftabgabeeinrichtung 7 auf.

Im Ständerteil 13 ist der Luftführungskanal 51 koaxial angeordnet. Er ist an einem in der Bildebene unteren freien Ende 63 an der Gebläseeinrichtung 3 über einen Flansch 65 befestigt. Ausgehend von seinem unteren freien Ende 63 ist der Luftführungskanal 51 zylindrisch und verjüngt sich dann konisch in einem Abschnitt 66 bis zu einer Stelle 67 geringsten Durchmessers. Auf diese Weise ist ein hindernisfreier Abstand AHF zwischen der Gebläseeinrichtung 3 und der Heizeinrichtung 5 vorgesehen, dessen Größe erfindungsgemäß derart gewählt ist, dass sich zumindest an einem Einlass 68 der Heizeinrichtung 5 eine durch das Lüfterrad 17 erzeugte vergleichmäßigte Luftströmung 49 einstellt. Der hindernisfreie Abstand AHF zwischen der Gebläseeinrichtung 3 und der Heizeinrichtung 5 ist durch einen freien Raum 69 gebildet, der durch Luftleitstege 71 der Heizeinrichtung 5 sowie die zuordenbaren Wandteile 73 des Luftführungskanals 51 begrenzt ist. Der hindernisfreie Abstand AHF erzeugt eine laminare Luftströmung 49 als vergleichmäßigte Luftströmung bei Betrieb der Gebläseeinrichtung 3. Das Lüfterrad 17 der Gebläseeinrichtung 3 weist einen größeren Durchmesser A17 als die Luftleitstege 71 mit dem Außendurchmesser A71 auf.

Ausgehend von der Stelle 67 geringsten Durchmessers ist der Luftführungskanal 51 wieder konisch erweitert und geht in einen zylinderförmigen Abschnitt 75 am oberen freien Ende 77 über. Der Luftführungskanal 51 ist von zwei kreuzförmig angeordneten, aus Mikanit hergestellten Luftleitstegen 71 der Heizeinrichtung 5 durchgriffen. Diese stützen sich an der konischen Erweiterung 79 im Oberteil 81 des Luftführungskanals 51 ab und ragen bis in den unteren zylindrischen Abschnitt 83. An der Außenseite 85 sind die Luftleitstege 71 mit U-förmigen Einschnitten 87 für einen Heizdraht 89 versehen. Der Heizdraht 89 ist wendelförmig gewickelt und mehrfach um die Luftleitstege 71 herum geführt, was der einfacheren Darstellung wegen nicht gezeigt ist, wobei er jeweils in die Einschnitte 87 eingelegt ist. In einer Aussparung 91 am oberen Ende 93 der Luftleitstege 71 ist im Heizdraht 89 ein temperaturabhängiger Widerstand 95 vorgesehen. Der Heizdraht 89 geht von Kontakten 97 am unteren Ende 99 der Luftleitstege 71 aus. Diese Kontakte 97 sind über Drähte 101 an die Leiterplatte 29 angeschlossen.

Auf den Luftführungskanal 51 ist die Luftabgabeeinrichtung 7 aufgesetzt. Die Luftabgabeeinrichtung 7 ist für die zumindest teilweise Aufnahme eines zu formenden Brillengestells (nicht dargestellt) topfförmig ausgebildet. Sie wird auch fachsprachlich als Wärmetopf bezeichnet. In einer Wand 103 der Luftabgabeeinrichtung 7 sind gegenüberliegend zwei im Wesentlichen U-förmige Aussparungen 105 vorgesehen, die von einem oberen Rand 107 der Luftabgabeeinrichtung 7 ausgehen. An der Rückseite 39 des Heißluftgeräts 1 ist ein Deckel 109 aus einem durchsichtigen Kunststoff schwenkbar an der Luftabgabeeinrichtung 7 befestigt. Im Bereich eines Bodens 111 weist die Luftabgabeeinrichtung 7 eine luftdurchlässige Trenneinrichtung 113 in Form einer vertikal nach oben leicht gewölbten Siebstruktur auf. Die erhitzte Luftströmung 49 des Luftführungskanals 51 strömt durch diese Trenneinrichtung 113 laminar in die Luftabgabeeinrichtung 7 ein.

Die Funktionsweise des Heißluftgeräts 1 wird nachfolgend erläutert. Das Heißluftgerät 1 wird über den Netzschalter 35 ein- und ausgeschaltet. Im eingeschalteten Zustand kann es über einen Näherungsschalter 45 aktiviert oder in einen Bereitschaftsmodus versetzt werden. Über einen Drehschalter 33 lässt sich dann eine vorgebbare Programmauswahl vornehmen und die jeweilige Nummer des Programms wird in der Anzeigeeinrichtung 47 dargestellt. Es sind beispielsweise drei Programme vorgesehen: (1) Dauerbetrieb, in dem ein gleichmäßiger Luftstrom einer einstellbaren Temperatur erzeugt wird; (2) 10-Minuten-Betrieb, in dem für zehn Minuten ein gleichmäßiger Luftstrom einer einstellbaren Temperatur erzeugt wird und das Heißluftgerät 1 anschließend in den Bereitschaftsmodus geschaltet wird, wobei durch Drücken eines der Drehschalter 33 oder durch den Näherungsschalter 45 ein neuer zehnminütiger Zyklus mit der zuletzt eingestellten Temperatur gestartet wird; und (3) Betrieb mit maximaler Heizleistung für zehn Minuten.

Mit dem zweiten Drehschalter 33 kann die Solltemperatur ausgewählt werden. Die Einstellung erfolgt in 5 °C-Schritten, bei schnellerem Drehen in 10 °C-Schritten. Die Temperatur kann dabei zwischen 85 °C und 240 °C eingestellt werden. Im eingeschalteten Zustand bewirkt das Betätigen, insbesondere das Drücken, des Drehschalters 33 die Auswahl eines Kühlmodus, in dem die Gebläseeinrichtung 3 mit höchster Drehzahl läuft und die Heizeinrichtung 5 ausgeschaltet ist. Der Kühlmodus wird von der Anzeigeeinrichtung 47 in Form von Gedankenstrichen dargestellt.

Die Anzeigeeinrichtung 47 zeigt die Isttemperatur in Schritten von 5 °C an. Wenn die Isttemperatur die eingestellte Solltemperatur erreicht hat oder die Differenz zwischen Soll- und Isttemperatur geringer ist als ein vorbestimmter Wert, beispielsweise 15 °C, so wird die Solltemperatur angezeigt. Wird die Solltemperatur erneut eingestellt, wird für drei Sekunden die Solltemperatur angezeigt und danach wieder die Isttemperatur. Bis die neue Solltemperatur erreicht ist, blinkt die Anzeigeeinrichtung, die in diesem Zustand die Isttemperatur anzeigt.

Im laufenden Betrieb kann ein Anwender Teile eines Brillengestells von oben durch die seitlichen Ausnehmungen 105 in die Luftabgabeeinrichtung 7 einschieben und dort in der heißen Luftströmung 49 erwärmen. Bei ausreichender Erwärmung werden diese Teile dann biegbar und können in eine gewünschte Form gebracht werden. Ebenso kann die Fassung einer Brille nach Aufschwenken des Deckels 109 in den Wärmetopf 7 eingelegt und dort erwärmt werden, beispielsweise um ein Brillenglas in die Fassung zu drücken.

Die erfindungsgemäße Lösung hat mehrere Vorteile: Durch die Drehzahlvariabilität (freie Drehzahleinstellung) des Elektromotors 15 kann der Druck, mit dem der Luftstrom 49 zur Heizeinrichtung 5 gefördert wird, eingestellt und insbesondere an einen erwärmungsabhängigen Widerstand im Bereich der Heizeinrichtung 5 angepasst werden. Bei der Erwärmung des Luftstroms 49 mit der Heizeinrichtung 5 dehnt sich dieser aus. Da bei den bekannten Heißluftgeräten 1 die Gebläseeinrichtung 3 nur mit einer konstanten Drehzahl betrieben werden kann, kommt es zu einer unerwünscht starken Beschleunigung des Luftstroms 49. Diese Beschleunigung ist nun aufgrund der Drehzahlvariabilität entsprechend vermindert. Der erhitzte Luftstrom 49, der nun in die Luftabgabeeinrichtung 7 einströmt, weist deshalb geringere Druck- und Geschwindigkeitsschwankungen auf. Ein weiterer Vorteil des drehzahlvariablen Elektromotors 15 ist, dass die durch ihn erzeugten Vibrationen minimiert werden können. Vorteilhaft ist auch, dass die Drehzahl abhängig von einem vom Anwender gewählten Programm eingestellt werden kann. Durch den hindernisfreien Abstand AHF wird eine verwirbelungsfreie oder zumindest verwirbelungsarme Luftströmung 49 erzeugt, die dann in die Heizeinrichtung 5 einströmen kann. Auf diese Weise wird die Geräuschentwicklung in der Heizeinrichtung 5 weiter vermindert.

## Patentansprüche

1. Heißluftgerät, insbesondere zum Erwärmen von Brillengestellen zwecks deren Formgebung, bestehend aus
- einer Gebläseeinrichtung (3) mit einem mit einem Elektromotor (15) antreibbaren Lüfterrad (17);
- einer elektrischen Heizeinrichtung (5); und
- einer Luftabgabeeinrichtung (7),
wobei der Elektromotor (15) drehzahlvariabel ist **dadurch gekennzeichnet, dass** ein hindernisfreier Abstand (AHF) zwischen der Gebläseeinrichtung (3) und der Heizeinrichtung (5) derart gewählt ist, dass sich zumindest an einem Einlass (68) der Heizeinrichtung (5) eine durch das Lüfterrad (17) erzeugte, vergleichmäßigte Luftströmung (49) einstellt, und dass die Heizeinrichtung (5) in einen Luftführungskanal (51) aufgenommen ist, der sich von einer Stelle (67) des geringsten Durchmessers sowohl in Richtung der Luftabgabeeinrichtung (7) als auch in Richtung der Gebläseeinrichtung (3) konisch erweitert.

2. Heißluftgerät nach Anspruch 1, **dadurch gekennzeichnet dass** die Heizeinrichtung (5) Luftleitstege (71) aufweist, welche den Luftführungskanal (51) durchgreifen.

3. Heißluftgerät nach Anspruch 2, **dadurch gekennzeichnet, dass** die Heizeinrichtung (5) mindestens einen elektrisch beheizbaren Heizdraht (89) aufweist, der um die Luftleitstege (71) herumgeführt ist.

4. Heißluftgerät nach Anspruch 2 oder 3, **dadurch gekennzeichnet, dass** der hindernisfreie Abstand (AHF) zwischen der Gebläseeinrichtung (3) und der Heizeinrichtung (5) durch einen freien Raum (69) gebildet ist, der durch die Luftleitstege (71) der Heizeinrichtung (5) sowie die zuordenbaren Wandteile (73) des Luftführungskanals (51) begrenzt ist, und dass der hindernisfreie Abstand (AHF) eine laminare Luftströmung (49) als vergleichmäßigte Luftströmung (49) bei Betrieb der Gebläseeinrichtung (3) erzeugt.

5. Heißluftgerät nach einem der Ansprüche 2 bis 4, **dadurch gekennzeichnet, dass** das Lüfterrad (17) einen größeren Durchmesser (A17) als der Durchmesser (A71) der Luftleitstege (71) aufweist.

6. Heißluftgerät nach einem der Ansprüche 1 bis 5, **dadurch gekennzeichnet, dass** die konische Erweiterung (66) des Luftführungskanals (51) in Richtung der Gebläseeinrichtung (3) in einen zylindrischen Führungsabschnitt (73) übergeht.

7. Heißluftgerät nach einem der vorstehenden Ansprüche, **dadurch gekennzeichnet, dass** die Gebläseeinrichtung (3) ein Axiallüfter ist.

8. Heißluftgerät nach einem der vorstehenden Ansprüche, **dadurch gekennzeichnet, dass** die Luftabgabeeinrichtung (7) für die zumindest teilweise Aufnahme eines zu formenden Brillengestells topfförmig ausgebildet ist und sich über eine luftdurchlässige Trenneinrichtung (113), insbesondere in Form einer plattenförmigen Sieb- oder Gitterstruktur, an die Heizeinrichtung (5) anschließt.

9. Heißluftgerät nach einem der vorstehenden Ansprüche, **dadurch gekennzeichnet, dass** die Heizeinrichtung (5) in einem Ständerteil (13) aufgenommen ist, an dessen oberem Ende (59) sich die Luftabgabeeinrichtung (7) anschließt und an dessen unterem Ende (53) sich die Gebläseeinrichtung (3) befindet, die vorzugsweise in ein Sockelteil (11) aufgenommen ist, das einen größeren Außendurchmesser (A11) als der Durchmesser (A13) des Ständerteils (13) aufweist.

10. Heißluftgerät nach Anspruch 9, **dadurch gekennzeichnet, dass** das Sockelteil (11) zumindest einen, vorzugsweise bodenseitigen, Lufteinlass (23) aufweist und über zumindest einen Fuß (25) von einer Aufstellfläche (27) für das Heißluftgerät (1) beabstandet ist.

11. Heißluftgerät nach einem der vorstehenden Ansprüche, **dadurch gekennzeichnet, dass** der Elektromotor (15) ein elektronisch kommutierender Gleichstrommotor ist.

12. Heißluftgerät nach einem der vorstehenden Ansprüche, **dadurch gekennzeichnet, dass** eine elektronische Steuereinheit (31) zur Ansteuerung der Heizeinrichtung (5) und/oder der Gebläseeinrichtung (3) vorgesehen ist und dass die elektronische Steuereinheit (31) vorzugsweise über einen Näherungsschalter (49) zum Einschalten der Gebläseeinrichtung (3) und/oder der Heizeinrichtung (5) verfügt.

13. Heißluftgerät nach einem der vorstehenden Ansprüche, **dadurch gekennzeichnet, dass** am Gehäuse (9), vorzugsweise am Sockelteil (11), zumindest ein Schalter (33, 35) zur Steuerung der Gebläseeinrichtung (3) und/oder der Heizeinrichtung (5) vorgesehen ist, insbesondere in Form eines Inkremental-Gebers (33) zur Programmwahl und/oder zur Solltemperatureinstellung für die Heizeinrichtung (5).

14. Heißluftgerät nach einem der vorstehenden Ansprüche, **dadurch gekennzeichnet, dass** im Gehäuse (9) eine Anzeigeeinrichtung (47) vorgesehen ist, insbesondere zur Anzeige der Isttemperatur des Luftstroms (49) im Bereich der Luftabgabeeinrichtung (7) und/oder zur Einstellung einer Solltemperatur für den in die Luftabgabeeinrichtung (7) einströmenden Luftstrom (49).

15. Heißluftgerät nach Anspruch 13 oder 14, **dadurch gekennzeichnet, dass** die Gebläseeinrichtung (3) in einer Aussparung (30) einer Leiterplatte (29) angeordnet ist, an welcher der Schalter (33, 35) und/oder die Anzeigeeinrichtung (47) befestigt ist.

## Claims

1. Hot air device particularly for heating glasses frames for the purpose of shaping said frames, consisting of
- a blowing device (3) with a fan impeller (17) that can be driven by an electric motor (15);
- an electric heating device (5); and
- an air output device (7),
said electric motor (15) being a variable-speed motor,
**characterised in that**
an unobstructed distance (AHF) is selected between the blowing device (3) and the heating device (5) such that a uniform air flow generated by the fan impeller (17) is adjusted at at least one inlet (68) of the heating device (5), and **in that** the heating device (5) is held in an air duct (51), which extends conically from an area (67) with the smallest diameter both in the direction of the air output device (7) and in the direction of the blowing device (3).

2. Hot air device according to claim 1, **characterised in that** the heating device (5) comprises air baffles (71), which pass through the air duct (51).

3. Hot air device according to claim 2, **characterised in that** the heating device (5) comprises at least one electrically heatable heating wire (89), which is wound around the air baffles (71).

4. Hot air device according to either claim 2 or claim 3, **characterised in that** the unobstructed distance (AHF) between the blowing device (3) and the heating device (5) is formed by a free space (69), which is delimited by the air baffles (71) of the heating device (5) and the assignable wall parts (73) of the air duct (51), and **in that** the unobstructed distance (AHF) generates a laminar air flow (49) as a uniform air flow (49) when the blowing device (3) is in operation.

5. Hot air device according to any one of claims 2 to 4, **characterised in that** the fan impeller (17) has a diameter (A17) that is larger than the diameter (A71) of the air baffles (71).

6. Hot air device according to any one of claims 1 to 5, **characterised in that** the conical extension (66) of the air duct (51) merges into a cylindrical guide section (73) in the direction of the blowing device (3).

7. Hot air device according to any one of the preceding claims, **characterised in that** the blowing device (3) is an axial fan.

8. Hot air device according to any one of the preceding claims, **characterised in that** the air output device (7) is designed to be cup-shaped to at least partially hold a glasses frame to be shaped and **in that** it is attached to the heating device (5) by means of an air-permeable separating device (113), particularly in the form of a plate-like sieve or grid structure.

9. Hot air device according to any one of the preceding claims, **characterised in that** the heating device (5) is held in a stand unit (13), the upper end (59) of which is joined to the air output device (7), and which has the blowing device (3) at its lower end (53), said blowing device preferably being held in a base part (11), which has an outer diameter (A11) that is larger than the diameter (A13) of the stand part (13).

10. Hot air device according to claim 9, **characterised in that** the base part (11) comprises at least one air inlet (23), preferably on its base, and is spaced away from an installation surface (27) for the hot air device (1) by at least one foot (25).

11. Hot air device according to any one of the preceding claims, **characterised in that** the electric motor (15) is an electronically commutated direct current motor.

12. Hot air device according to any one of the preceding claims, **characterised in that** an electronic control unit (31) is provided to control the heating device (5) and/or the blowing device (3) and **in that** the electronic control unit (31) preferably has a proximity switch (49) to switch on the blowing device (3) and/or the heating device (5).

13. Hot air device according to any one of the preceding claims, **characterised in that** at least one switch (33, 35) to control the blowing device (3) and/or the heating device (5) is provided, preferably on the base part (11), particularly in the form of an incremental encoder (33) to select the program and/or adjust the target temperature for the heating device (5).

14. Hot air device according to any one of the preceding claims, **characterised in that** a display device (47) is provided in the housing (9), particularly to display the actual temperature of the air flow (49) in the region of the air output device (7) and/or to adjust a target temperature for the air flow flowing into the air output device (7).

15. Hot air device according to either claim 13 or claim 14, **characterised in that** the blowing device (3) is arranged in a recess (30) of a printed circuit board (29), to which the switch (33, 35) and/or the display device (47) is/are attached.

## Revendications

1. Appareil à air chaud, notamment pour échauffer des montures de lunettes en vue de leur façonnage, constitué de
- un dispositif (3) d'insufflation, ayant une roue (17) de ventilateur pouvant être entraînée par un moteur (15) électrique ;
- un dispositif (5) de chauffage électrique ; et
- un dispositif (7) de distribution d'air,
dans lequel le moteur (15) électrique est à vitesse de rotation variable,
**caractérisé en ce qu'**une distance (AHF) sans obstacle entre le dispositif (3) d'insufflation et le dispositif (5) de chauffage est choisie de manière à établir, au moins à une entrée (68) du dispositif (5) de chauffage, un écoulement (49) d'air très comparable, produit par la roue (17) du ventilateur et **en ce que** le dispositif (5) de chauffage est logé dans un conduit (51) de conduite d'air, qui s'élargit coniquement à partir d'un point (67) du diamètre le plus petit, à la fois dans la direction du dispositif (7) de distribution d'air et dans la direction du dispositif (3) d'insufflation.

2. Appareil à air chaud suivant la revendication 1, **caractérisé en ce que** le dispositif (5) de chauffage a des entretoises (71) de canalisation d'air, qui passent dans le conduit (51) de conduite d'air.

3. Appareil à air chaud suivant la revendication 2, **caractérisé en ce que** le dispositif (5) de chauffage a au moins un fil (89) de chauffage pouvant être chauffé électriquement, qui est guidé autour des entretoises (71) de conduite d'air.

4. Appareil à air chaud suivant la revendication 2 ou 3, **caractérisé en ce que** la distance (AHF) sans obstacle entre le dispositif (3) d'insufflation et le dispositif (5) de chauffage est formée d'un espace (69) libre, qui est délimité par les entretoises (71) de canalisation d'air du dispositif (5) de chauffage, ainsi que par les parties (73) de paroi pouvant être associées du conduit (51) de conduite d'air et **en ce que** la distance (AHF) sans obstacle produit, lorsque le dispositif (3) d'insufflation est en fonctionnement, un écoulement (49) d'air laminaire, en tant qu'écoulement (49) d'air très comparable.

5. Appareil à air chaud suivant l'une des revendications 2 à 4, **caractérisé en ce que** la roue (17) du ventilateur a un diamètre (A17) plus grand que le diamètre (A71) des entretoises (71) de conduite d'air.

6. Appareil à air chaud suivant l'une des revendications 1 à 5, **caractérisé en ce que** l'élargissement (66) conique du conduit (51) de conduite d'air se transforme, dans la direction du dispositif (3) d'insufflation, en un tronçon (73) de guidage cylindrique.

7. Appareil à air chaud suivant l'une des revendications précédentes, **caractérisé en ce que** le dispositif (3) d'insufflation est un ventilateur axial.

8. Appareil à air chaud suivant l'une des revendications précédentes, **caractérisé en ce que** le dispositif (7) de distribution d'air est constitué en forme de cuvette pour la réception, au moins partielle, d'une monture de lunettes à former et se raccorde au dispositif (5) de chauffage par un dispositif (113) de séparation perméable à l'air, notamment sous la forme d'une structure à tamis ou à grille en forme de plaque.

9. Appareil à air chaud suivant l'une des revendications précédentes, **caractérisé en ce que** le dispositif (5) de chauffage est logé dans une partie (13) formant bâti, à l'extrémité (59) supérieure de laquelle se raccorde le dispositif (7) de distribution d'air et à l'extrémité (53) inférieure de laquelle se trouve le dispositif (3) d'insufflation, qui est logé de préférence dans une partie (11) formant socle, qui a un diamètre (A11) extérieur plus grand que le diamètre (A13) de la partie (13) formant bâti.

10. Appareil à air chaud suivant la revendication 9, **caractérisé en ce que** la partie (11) formant socle a au moins une entrée (23) d'air, de préférence du côté du fond, et, par au moins un pied (25), est à distance d'une surface (27) de montage de l'appareil (1) à air chaud.

11. Appareil à air chaud suivant l'une des revendications précédentes, **caractérisé en ce que** le moteur (15) électrique est un moteur à courant continu à commutation électronique.

12. Appareil à air chaud suivant l'une des revendications précédentes, **caractérisé en ce qu'**il est prévu une unité (31) électronique de commande pour commander le dispositif (5) de chauffage et/ou le dispositif (3) d'insufflation et **en ce que** l'unité (31) électronique de commande dispose de préférence d'un interrupteur (49) de proximité pour mettre en circuit le dispositif (3) d'insufflation et/ou le dispositif (5) de chauffage.

13. Appareil à air chaud suivant l'une des revendications précédentes, **caractérisé en ce qu'**il est prévu, sur l'enveloppe (9), de préférence sur une partie (11) formant socle, au moins un interrupteur (33, 35) de commande du dispositif (3) d'insufflation et/ou du dispositif (5) de chauffage, notamment sous la forme d'un transmetteur (33) incrémental de choix de programme et/ou de réglage de la température de consigne du dispositif (5) de chauffage.

14. Appareil à air chaud suivant l'une des revendications précédentes, **caractérisé en ce qu'**il est prévu dans l'enveloppe (9) un dispositif (47) d'affichage, notamment pour afficher la température réelle du courant (49) d'air dans la région du dispositif (7) de distribution d'air et/ou pour régler une température de consigne du courant (49) d'air entrant dans le dispositif (7) de distribution d'air.

15. Appareil à air chaud suivant la revendication 13 ou 14, **caractérisé en ce que** le dispositif (3) d'insufflation est disposé dans un évidement (30) d'une plaquette (29) à circuit imprimé, sur laquelle est fixé l'interrupteur (33, 35) et/ou le dispositif (47) d'affichage.
